# EUROPEAN PATENT SPECIFICATION

(11) **EP 1 887 884 B1**
(45) Date of publication and mention of the grant of the patent: **24.05.2017**
(21) Application number: 06750385.4
(22) Date of filing: 17.04.2006
(51) Int. Cl.: A23L 7/00, A23L 7/10, A23C 13/16, B02B 1/08, B02B 5/02, A23C 9/13, A23C 19/05

(54) **CONTINUOUS PRODUCTION OF PREGELATINIZED CORN FLOURS FOR DAIRY-BASED AND CEREAL-BASED FOODS**
KONTINUIERLICHE HERSTELLUNG VON VORVERKLEISTERTEN MAISMEHLEN FÜR NAHRUNGSMITTEL AUF MOLKEREIPRODUKT- UND GETREIDEGRUNDLAGE
PRODUCTION EN CONTINU DE FARINE DE MAIS PREGELATINISEE POUR PRODUITS LAITIERS ET ALIMENTS A BASE DE CEREALES

(30) Priority: 05.05.2005 US 122106
(43) Date of publication of application: 20.02.2008
(73) Proprietor: Gruma S.A.B. de C.V., 66220, San Pedro Garza Garcia, N.L. (MX)
(72) Inventor: RUBIO, Felipe, A., Edinburg, TX 78539 (US); RUBIO, Manuel, J., Miami Beach, FL 33139 (US); ARROYO, Francisco, Edinburg, TX 78539 (US); NORTON, Rick, Irving, TX 75038 (US); CONTRERAS, Roberto, Guadalupe, N.L., 67110 (MX); ARCE, Miguel, Guadalupe, N.L., 67110 (MX); RAMIREZ, Fernando, J., Guadalupe, N.L., 67110 (MX)
(74) Representative: Cabinet Plasseraud
(86) International application number: PCT/US2006/014335
(87) International publication number: WO 2006/118778

(56) References cited:
- WO-A1-2004/071200
- US-A- 3 077 408
- US-A- 4 350 714
- US-A- 4 777 045
- US-A- 6 068 873
- US-B1- 6 322 836

## Description

### BACKGROUND OF INVENTION

### 1. Field of the invention

The present invention relates to an acid precooking process for the production of pregelatinized corn flours and, more particularly, to one that achieves continuous partial hydrolysis of insoluble fiber and avoids excessive pregelatinization and denaturation with a sulfiting reducing agent as a food processing aid used during the manufacture of ultrafine corn and fine flour for the elaboration of dairy-based and cereal-based foods.

### 2. Description of the Related Art

The production of high-quality masa and corn flours can be achieved by conventional techniques only if the food-grade corn has the following characteristics: uniformity in kernel size and hardness, a low number of stress-cracks and kernel damage, and ease of pericarp removal during the lime-water cooking process. The five general classes of corn-flint, popcorn, flour, dent and sweet-are based on kernel characteristics. Since dent corn is a derivative of flint-flour crosses, it can show significant differences in the ratio of horny to floury endosperm caused by genotype and environmental factors. The ratio of horny (hard and translucent) to floury (soft and opaque) endosperm may average about 2:1 in dent corn. It is known that the food grade corn (U.S. No.2: USFGC, 1996) should be partially cooked before it is formed into the end products, so as to cause it to be a precooked corn flour. White-kernel corn may contain: 11.0-11.5% moisture, 72.2-73.2% starch/non-starch polysaccharides, 9.8-10.5% protein, 3.7-4.6% fat and 1.1-1.7% ash. For example, a dry-milled corn sample might yield, on a dry weight basis, 74.8-76.2% total endosperm, 18.9-20.5% germ and 3.3-6.3% bran. The mature dent kernel (Watson, 1987; FAO, 1993) has four separable components, on a dry weight basis: tip cap (0.8-1.1%), pericarp (5.1-5.7%) and aleurone (2.0-3.0 %), endosperm (78.3-81.9%), and germ (10.2-11.9%). In dry or wet-milling processes, the separated bran includes the pericarp, tip cap, aleurone layer (isolated with bran) and adhering pieces of starchy endosperm as well. A native corn bran contained some starch (4-22%) and proteins (5-8%) arising from endosperm tissue and glycoprotein as well (Saulnier et al. 1995 and Hromadkova et al. 1995). In the dry-milling process, the primary product is isolated pieces of floury and horny endosperm, which are recovered by progressive milling, sieving (or classifying) and aspiration process. To recover starch by wet-milling, the granules within the endosperm cells must be released from the protein matrix (gluten) by treating corn (or endosperm) with alkali or a reducing agent (preferably sulfur dioxide) in a steeping process.

Nixtamalized corn flour (NCF) is produced by the steps of alkaline cooking (heating and steeping) of corn, washing, milling the nixtamal, and drying, thereby producing corn masa flour. This precooked flour is sieved and blended for different product applications and it is usually supplemented with additives before packaging for commercial table or packaged-tortilla and corn-based foods. Although the pericarp or bran is partially removed during the alkaline-cooking and washing process steps, there is still fiber left from the corn kernel (U.S. Patent 4,513,018).

The Mexican Masa Flour and Wheat Milling Industry signed a federal agreement in 1999 to add micronutrients to staple flours such as nixtamalized corn for tortillas and wheat flours for bread and flour tortillas. About 66% of the wheat flour brands are enriched with ferrous-iron and folic acid whereas all masa flour is further enriched (representing at least 30% of the tortilla consumption) with reducediron, zinc and B-complex vitamins.

There are marked differences between corn tortillas versus wheat tortilla and bread in relation to: their physico-chemical flour composition, ingredients, dough making and baking process. Cereal-based products use a debranned and degermed wheat flour (forming ingredient). The dough used for making bread and similar products always contains more ingredients than does corn tortilla dough. Examples include texture modifiers (shortening, salt and sugar/syrup), leavening agents (sodium bicarbonate and/or yeast) and characterizing agents (flavor/spice, gums and antimicrobial additives). The base ingredients for corn tortilla include a nixtamalized whole-corn or limed-precooked corn flour, with water and antimicrobial or functional additives that can be mixed prior to dough making for baking and packaging (U.S. Patent 3,730,732).

Most micronutrient losses occur during milling, which is one of the early steps in the refining process. During grinding, the bran and germ layers are removed, and the remaining starchy endosperm, which contains few antioxidants compounds, is ground into flour to make cereal-based foods (bread and tortillas). Whole-grain products retain the bran and germ, which provide phenolic acids (ferulic/diferulic, p-coumaric and vanillic) and phytic acid that may act independently or synergistically with dietary fiber (heteroxylan) to reduce the risk of coronary artery disease, colon cancer and type-2 diabetes (insulin resistance). About 69% of the total phenolics present in corn are insoluble bound forms (b-glycosides), with ferulic acid being the major compound. Feruloylated oligosaccharides from the side chains of corn heteroxylan can be isolated by acid hydrolysis or solubilized as ferulic acid sugars esters following heat-treatment of sweet-corn (115° C and 25 minutes have the effect of elevating total phenolics by 54%) and having a better suppressive effect on low-density lipoprotein oxidation than free ferulic acid. Consuming the recommended minimum of three servings of whole grains a day would increase the antioxidant and dietary fiber intake and lower the risk of heart disease by 25-36% (Decker et al. 2002). The top grain crops produced in the world are wheat, rice and corn.

New baked foods containing whole grains may qualify to carry labels with the following or other related health claims: a) "Development of cancer depends on many factors. Eating a diet low in fat and high in grain products, fruits and vegetables that contain dietary fiber may reduce your risk of some cancers" (21 CFR 101.76); and b) "Development of heart diseases depends on many factors. Eating a diet low in saturated fat and cholesterol and high in fruits, vegetables and grain products that contain fiber may lower blood cholesterol levels and reduce your risk of heart disease" (21 CFR 101.77 and 81: FDA/DHHS, 2004).

According to current trends, obesity will become the first cause of death by 2005 rivaling the annual deaths from cancer. Conditions of overweight and obesity are associated with type-2 diabetes, hypertension, hypercholesterolemia, asthma, arthritis, and poor health status. Some individuals might do best on a very-low-fat, high-carbohydrate diet, whereas others may respond to lowering carbohydrate intake (Atkins Foundation, 2005). The WHO (DHHS, 2003) considers that unhealthy diets and physical inactivity are the leading causes of the major chronic diseases with 60% of deaths and 47% of illness worldwide. These problems are not restricted to affluent nations but are rapidly gaining ground in the developing world, particularly among the young population.

A WHO (2003) report (Integrated prevention of noncommunicable diseasescardiovascular, type-2 diabetes and certain cancers: Draft global strategy on Diet, Physical Activity and Health) recommended a diet limiting fat to between 15% to 30% of total energy intake and saturated fats to less than 10%. Carbohydrates (whole grains) should account for the bulk requirements-between 55% and 75%-but free sugars should stay below a 10%-. Protein intake should remain at about 10% to 15%. Most diseases are caused by an incorrect lifestyle and diet. Current habits of eating make people ill and weak, shorten their lifespans, and impair mental and spiritual health (Know Thyself-prevention is better than cure and health is wealth: SSSB, 1995).

The cell walls or non-starch polysaccharides (NSP) are the major corn dietary fiber components and are composed of hemicellulose (heteroxylan or pentosan and β-glucan: 4.4-6.2%), cellulose (2.5-3.3%) and some lignin (0.2%). According to Watson (1987: Tables IV and VII), the corn pericarp/tip cap makes up 6-7% and the aleurone-endosperm has about 2-3% of the kernel dry weight. This pericarp also contains 90% insoluble fiber (67% hemicellulose and 23% cellulose) and only 0.6% soluble-fiber (soluble-arabinoxylan and β-glucan). It is estimated that dietary fiber in both bran (4.9%) and endosperm (2.6%) make up 80% of the total dietary fiber. The corn insoluble fiber is mainly found in the bran and endosperm (aleurone and starchy), which make up 68% of the total dietary fiber (9.5% on a dry-weight basis).

All corn bran layers comprise the outer (beeswing or hull), inner (cross and tube cells), nucellar and endosperm (aleurone and starchy) cell-walls. Unlike corn endosperm (corn grits), in which soluble fiber amounts to 12% of the total fiber (4.1%), in whole wheat, soluble fiber represents 22% of total fiber (about 20% of the flour water-uptake is bound to the soluble pentosan fraction). The heteroxylan polymer is apparently linked to the cellulose skeleton in the corn cell wall by ester linkage cross-bonding through ferulic (3.1% or 31,000 ppm dry weight) and diferulic acid (0.5%). However, heteroxylan insolubility in corn bran might be due to protein-polysaccharide linkages (pericarp glycoprotein) and a highly branched structure (23% linear) as opposed to wheat bran (Saulnier et al. 1995). In the United States, the use of sterols in vegetable oils, margarines and spreads, yogurt, snack bars, salad dressings, dietary supplements and health drinks has received a GRAS status from the FDA. At least 0.65 grams of sterol esters (0.4 grams of free sterols) and 1.7 grams of stanol esters per serving (50 grams) may include a health claim that the consumption of phytosterols (vegetable oil byproducts) may reduce cholesterol and coronary heart disease. An industrial lime-treated corn bran (Maseca ®) contained 4-5% alcohol-toluene extract (unsaponifiable matter) with a total sterol content of 860-900 ppm (GRAS Notice-61, 2000) and this represents about 50% of a dry-milled corn germ content (Arbokem-Canada, 2000). Functional foods, which may be known as designer foods or medical foods, are defined as processed foods containing ingredients that aid specific bodily functions in addition to being nutritious. Dietary supplement or adjunct marketers who want to sell a "new dietary ingredient¨ have to give FDA advance notice of their plans and provide evidence that the product is safe, but in most cases, they are not made with new dietary ingredients. When a manufacturer wants to make a labeling claim of effect on the structure or the function of the body, then they require scientific evidence for a claim.

During alkali cooking and/or steeping, there are chemical and physical changes such as nutrient losses along with partial pericarp or bran removal, degradation of the endosperm periphery with starch gelatinization/swelling and protein denaturation in the precooked corn kernel. The most important nutritional modifications are: an increase in the calcium level with improvement in the Ca to P ratio; a decrease in insoluble dietary fiber and zein-protein; a reduction in thiamin and riboflavin; an improvement of the leucine to isoleucine ratio, reducing the requirement for niacin; niacin-release from pericarp/aleurone/endosperm; and leaching of ferulic-acid (Sanchez, Ramirez and Contreras, 2005), residual insecticides, fungicides and micotoxins into the alkaline steep-liquor or ¨nejayote¨ (FAO, 1993 and Sustain, 1997).

In a commercial operation, corn solid loss has been estimated at 5-14% depending on the type of corn (hard or soft) and on the severity of the cooking, washing and drying process. Tortilla quality was not directly related to solid loss (bran removal) and acceptable tortillas had < 4% loss. Properly processed industrial corn or masa flour simplifies the production of tortilla products, because the customer eliminates management techniques required for wastewater treatment, securing, handling and processing corn into masa for tortillas and snacks. However, a pregelatinized corn flour might have the following quality and cost limitations: high cost, lack of flavor, and poor texture in cereal-based snacks or maize-flour raviolis prepared from nixtamalized corn flours (U.S. Patent 6,491,959 and Erempoc et al. 1997).

The third-generation (3G) cereal foods include the steps of extrusion cooking, followed by cooling, holding and drying to make "cereal pellets" which are expanded by frying or baking to make nixtamalized corn-based foodstuffs (novel masa-based snack in U.S. Patent 5,120,559 and hypercholesterolemia-reducing snack in U.S. 20040086547). Another example is breakfast cereals made by cooking whole grains or grits (wheat, barley, rye, oats, rice or corn), followed by cooling, tempering, shredding, forming into ¨biscuits¨ and baking or toasting the cereal-based foods (CA 2015149).

Sulfiting agents have been used around the world for technological functions that include: a) inhibiting oxidation (enzymatic browning) of fruits (dried fruits:<600 ppm)), vegetables (dehydrated potatoes:<250 ppm) and carbonated beverages (bulk-wine:<350 ppm), b) preventing melanosis (melanin pigments) on shrimp and lobster, c) providing antimicrobial growth during winemaking (50-100 ppm), d) conditioning wheat dough (disulphide-bond reduction) and e) bleaching/modifying of food starches (FDA 121.1031 with <500 ppm).

When the Federal Food, Drug, and Cosmetic Act was amended in 1958 to regulate preservatives and other food additives, FDA considered sulfites (any sulfiting agent: sulfur dioxide, sodium/potassium metabisulfite, sodium/potassium bisulfite and sodium sulfite) to be generally recognized as safe (GRAS). However, all GRAS substances produced through recombinant-DNA that were widely consumed prior to 1958, and which have been modified and commercially introduced afterwards must comply with regulatory requirements proposed in 21 CFR 170.36 (GRAS Notice-60 for potassium bisulfate when used as a food processing aid in cheeses at <3 ppm, alcoholic beverages at <140 ppm and cake mixes at 0.1-1.0%). In 1985, the FDA concluded that sulfites are safe for most people, but pose a hazard of unpredictable severity to asthmatics and others who are sensitive or allergic (1% in USA) to these ingredients.

These secondary additives, a sub-class of direct additives (21 CFR 172, 170.36 and 101.1), are primarily Processing Aids which are used to accomplish a technical effect during food processing but are not intended to serve as a functional additive or preservative in the finished food if no detectable amount of the agent is present. A detectable amount of sulfiting agent is 10 ppm or more of the sulfite-as sulfur dioxide- in the finished food (21 CFR part 101.1 Food; exemptions from labeling). Finally, the list of some potential allergenic ingredients (E.U. food labeling regulations by 2005) includes: Cereals containing gluten and products thereof (celiac disease provokes a chronic intestinal inflammation that is induced by cereal prolamins-rich in proline and glutamine- from wheat, barley, rye and oats); soybeans and soybean products; Milk and Dairy products, including lactose and Sulphur dioxide and Sulphites at concentrations higher than 10 ppm.

With the escalation of health care costs around the world, especially in North America, Japan and Europe (8% of the gross domestic product), the focus has shifted from treatment to prevention. Approximately 11 million people in the USA suffer from food allergies, and in Europe it is estimated that 8% of children and 3% of adults are also affected.

Biotheraphy of gastrointestinal disorders is not yet accepted in clinical practice to treat food allergies. However Prebiotic- and Probiotic-based therapies may have the potential for the treatment of particular conditions. Prebiotics are nondigestable dietary components that pass through the digestive tract to the colon and selectively stimulate proliferation and/or activity of populations of desirable bacteria in situ. Probiotics, on the other hand, are microorganisms that are used as dietary supplements with the aim of benefiting the consumer's health by positively influencing the intestinal microbial balance. Lactic acid bacteria species are increasingly being used as functional ingredients, particularly in dairy products such as yogurts and fermented milk. Due to the potential synergy between prebiotics and probiotics, foods containing a combination of these functional ingredients are often referred to as synbiotics.

Tortillas are the main edible corn product in North and Central America. It is a flat, round, unleavened and baked thin-pancake (flat-cornbread) made from fresh masa or corn dough prepared from industrial nixtamalized corn flour (NCF). It should be mentioned that a tortilla, when manually or mechanically elaborated and without additives of any kind, has a maximum shelf life of 12 hours at room temperature. Afterwards they are spoiled by contaminating microorganisms (ropy and spore-forming bacteria) and become hard or stale due to a physicochemical change in the starch constituent of either stored or reheated tortillas (starch retrogradation/annealing). It is known that tortillas, even when kept under conditions in which no moisture is lost (as in a plastic package), nevertheless become stiff with time and break or crumble easily when bent. The addition of edible water-soluble edible substances (<1%; pH=7.5-9.5) to the lime-treated corn dough markedly retarded the tortilla spoilage (U.S. Pat. 3,730,732).

In northern South America, particularly in Colombia and Venezuela, food-grade corn is processed with dry milling technology without wastewater and it is further converted into a precooked, degermed and debranned flour for traditional corn foods. Its consumption is mainly in the form of an "arepa", which is a flat or ovoid-shaped, unleavened, and baked thick-pancake made from dry-milled corn flour. In other South American countries, corn meal (polenta) and corn flour are used for different bakery (empanada and pancake mixes), gruel (atole) and snack foods (FAO, 1993).

A corn wet-milling process for starch production involves an acidic fermentation (pH< 5) during steeping or soaking whole kernels counter-currently (1-2 days at 45-50°C). The technical or functional effect is to soften the endosperm and to break the disulfide-bonds holding the protein matrix together. It involves a diffusion limited unit operation where two processing aids are required: with 0.10-0.25% sulfur dioxide and 0.50-2.0% lactic acid usually produced by endogenous or exogenous Lactobacillus spp. (Watson, 1987). The microflora of fermented nixtamalized corn can yield a spontaneous solid-state fermentation to produce a corn sour-dough such as ¨Pozol¨ consumed as a gruel/beverage by the indigenous population in S.E. Mexico (Ramirez and Steinkraus, 1986). Lactobacilli identified in the lab-fermented nixtamalized dough (pH< 4) were L. plantarum, L. fermentum and Pediococcus spp. (Sefa-Dedeh et al. 2003). The main result of a lactic fermentation is a dispersion of endosperm protein/zein and an enhancement of starch release during subsequent milling for acid-fermented corn gruels/porridges such as: Ghanian kenkey, Nigerian ogi (industrial), Kenyan uji and South African mahew (Steinkraus, 2004). Novel dry sour-doughs or fermented cereal-based ingredients or compositions (containing wheat, oat, barley, rye and rice) have been innovated with commercial lactic-acid starters for products such as wheat/rye bread (DE 4308707) and wheat-based cracker (U.S. Pat. 6,649,197) or low-fat fermented milk foods (EP 0663153) and low-fat dairy spreads (WO 9808400) as well.

Other unfermented materials such as potato starch, pregelatinized starches and flours, vegetable gums and grain-based fibers are also used to bind and reduce water migration in dairy products. A commercial gum preparation (0.15-0.25%) added before milk pasteurization for cheese making effected an increased yield with additional desirable textural and sensory characteristics (NZ 507104). A microbial gum (<1%-3%) was also used to recover dairy protein from cheese-whey and the protein-gum precipitate used as food additive (EP 0471408). Finally, physically-modified/pregelatinized starches or cereal-based ingredients have been designed on their technical or processing-aid properties as well (U.S. Pat. Nos.: 5,061,104 and 6,861,081). By adjuvant materials or food processing aids as used herein is meant the materials and substances selected from the group consisting of cereal, starch, vegetable flour, soy flour; edible gums, pectins, hydrocolloids and dietary fibers; or mixtures thereof. Granule size is a characteristic property for commercial wheat, potato and corn starches. Reduced sizing is reported to have better water absorption and enzyme susceptibility during food processing. It can also be used as a potential fat substitute in foodstuffs due to an ability to provide fat-like texture or mouthfeel and increase moisture retention during cereal-based and dairy processing.

Classification is the separation of a particulate material into a coarse and fine fraction. The separation has always been by size in flour production. At various stages of production, the flour is sifted using a mesh of a size that allows only particles of a predetermined maximum size to pass through. Until now, separation of flour by size alone has been adequate for flour production.

Other, non-food industries have historically used other mechanisms for sorting particulate matter, taking into consideration other particle properties such as density. For example, density is insignificant when using screen or sifters but is a major factor in centrifugal air classifiers where fluid drag forces are mainly involved. Depending on the equipment used, classification might also be affected by particle shape, electric, magnetic and surface properties. It requires increasingly more energy if ultrafine particles are to be produced. With decreasing size the homogeneity of the particles also generally increases.

WO 2004/071200 describes a cyclone separator and a sifter to separate and recover a fine grind fraction of 20-60 Mesh (0.841-0.250 mm).

US 3,077,408 describes a method of separating grain particles utilizing vortex-type air separation techniques.

Air classifiers (also called air separators) include any gas, but clean air is used preferably and the classification in the medium to submicrometer particle range (1000 to 0.1 micron) is effected in a stream of air, using a combination of any of the following forces: gravity, drag, collision and centrifugal. Other classifier devices such as grates and screens/sieves operate in the large to medium range (500 mm down to 0.15 mm or 150 µm: 100 U.S. Standard Mesh). Density is insignificant when using screens or sieves, but is a major factor in air classifier where fluid drag forces are involved.

Centrifugal separators (or cyclones) are widely used in the chemical/pharmaceutical industry and for the removal of solid and liquid (aerosol or ultrafine particles) matter from gas streams. Cyclones are considered separation equipment even though a superfine (ultrafine) fraction entrained in the outlet gas which must be recovered in another separation step-as in a cyclone downstream. They have a medium collection efficiency (80-95% for 15 to 50 µm size: 325 Mesh) and a high throughput (Theodore et al. 1976).

The Mumford-Moodie Separator, patented in 1885, is similar to the Sturtevant Whirlwind (Klumpar et al. 1986). Solids are fed into a rising clean air stream, using a rotating distributor plate that imparts a centrifugal force. Large particles drop into an inner cone (tails or fine discharge); the ultrafine fraction (10 to 420 µm: 40 Mesh) is swept upward by the action of an internal fan, separated from air between vanes in the expansion section of the outer cone, and collected at its bottom. The air, separated from the ultrafine in the outer cone, is recirculated continuously up to the distributor which spreads the incoming feed into the ascending air. Thus, the updraft classifier incorporates almost all the key forces, whereas a cyclone only uses the gravitational-inertia force.

The magnitude of these forces is highly dependent upon the diameter of the particle, either through its dependence on the mass of the particle, or through the drag coefficient and characteristic area. Large particles are mostly affected by gravity and centrifugal forces, whereas intermediate-sized and small-sized/ultrafine particles will be affected mostly by aerodynamic drag force. Industrial air classifiers (centrifugal) are made by Sturtevant Inc., C.E. Raymond, Humboldt Wedag, Polysius, Smidth Sepax, Hardinge Gyrotor and Onoda.

Corn flour processors can generate added value from their industrial operations in one of three approaches: developing new products from new hybrids, increasing the yield of traditional products from corn, and improving process efficiency at a lower unit cost. In the past, this has been done by methods and using an apparatus in which the grain is cooked and/or steeped in a lime-water solution such as those disclosed in U.S. Patents Nos. 2,584,893, 2,704,257, 3,194,664, and 4,513,018. These prior art methods for the industrial production of masa flour involve accelerated lime precooking and steeping times with large amounts of soluble-waste (1.2-2.0% COD: Alvarez and Ramirez, 1995) and corn solid loss (∼1.5-2.5%: 50-60% dietary fiber, 15-20% ash, 15% starch, 5-10% protein and <5% fat).

Many and varied methods for the production of instant corn flour for food products involving lower amounts of water with low-temperature precooking for a high yield of the end product have been developed, as reflected by the following U.S. Patents: 4,594,260, 5,176,931, 5,532,013, 6,387,437 and 6,638,554. In this connection, reference is made to U.S. Patent Nos. 4,594,260, 5,176,931, 5,532,013, and 6,265,013, which also require low-temperature drying. On the contrary, U.S. Patent Nos. 4,513,018, 5,447,742 5,558,898, 6,068,873, 6,322,836, and 6,344,228 have used a high-temperature dehydration or rapid cooking in place of a low-temperature cooking.

Having in mind the disadvantages of the prior art methods, several studies not only have used a low-temperature and rapid precooking with minimum wastewater, but also separate corn fractions as reflected by the following U.S. Patents Nos. 4,594,260, 5,532,013, 6,025,011, 6,068,873, 6,265,013, 6,326,045 and 6,516,710.

A few applications for acidic steeping or precooking were also tested to convert a traditional corn processing into a novel chemical or biochemical process with reduced wastewater (U.S. Patent Nos. 1,045,490 and 6,322,836 or WO Pat. 00/45647). Three recent innovations have been published (WO Patents: 00/45647, 01/98509 and WO 2004/023892 A1) for the preparation of a modified corn foodstuff using either a reducing agent (metabisulfite), or an acidic reductase enzyme or hydrosulphite as processing aids and added during the corn cooking stages such that its native protein was partially modified.

Although the above described prior art methods are capable of partial precooking of corn for a modified masa foodstuff, corn grit and broken corn, a continuous industrial application using not only a sulfiting precooking but also a centrifugal separator yielding ultrafine and fine corn flours for dairy and cereal-foods was still unavailable in the market at the time of the invention.

### SUMMARY AND OBJECTS OF THE INVENTION

Accordingly, it is an object of this invention to provide a complete departure from the prior art and rapid precooking methods of thermal, mechanical, chemical and biochemical or enzymatic processing of whole corn in order to control starchy endosperm pregelatinization and protein denaturation using a sulfite precooking during the continuous production of ultrafine and fine corn flours for dairy-based and cereal-based foodstuffs.

It is another object of this invention to use a centrifugal air separator not only to continuously produce an ultrafine corn flour used as a food processing aid in dairy foods but also to yield a fine corn and bran flour as a cereal-base ingredient.

Another object is to achieve this objective using an industrial method and apparatus involving an acid precooking with sulfites for a partial hydrolysis of corn cell-walls, starch and proteins along with a water diffusion effecting a controlled starch pregelatinization and protein denaturation with a reduced corn loss during the production of pregelatinized corn flours.

The above and other objects and advantages of the invention are achieved through a continuous process applied to the production of pregelatinized corn flours for dairy and cereal-based foods, embodiments of which include a precooking with a sodium metabisulfite, or sodium hydrogen sulfite or sodium sulfite solution as a processing aid so as to effect a partial hydrolysis of insoluble fiber, starch and protein along with a controlled pregelatinization and denaturation, reduced kernel washing and solid loss into wastewater, stabilization of the moisture content to a desired optimum level for grinding, milling and drying the preconditioned kernel to produce a uniform partial cooking, cooling and further drying the dry-ground particle, centrifugal separating and recovering the ultrafine grind so produced from the coarser grind while the latter is further aspirated to remove a corn bran fraction and further milling it to produce a fine bran for whole-corn and partial whole- flour, remilling the isolated coarser grind and further sieving it to obtain a fine corn flour for cereal-based foods, and admixing only a fine flour with lime to produce a masa flour for tortilla. An ultrafine corn flour is used as an aid or adjuvant for the dairy-based foodstuffs.

### BRIEF DESCRIPTION OF THE DRAWINGS

The invention will be more fully understood from the description, which follows, and from the appended drawing in which the sole drawing figure depicts an embodiment of this invention in a block-type flowchart illustrating the continuous and industrial process using an acid-precooking with sulfites as a processing aid and a centrifugal air separator to recover an ultrafine corn grind from a coarse corn grind.

### DETAILED DESCRIPTION OF THE PREFERRED EMBODIMENTS

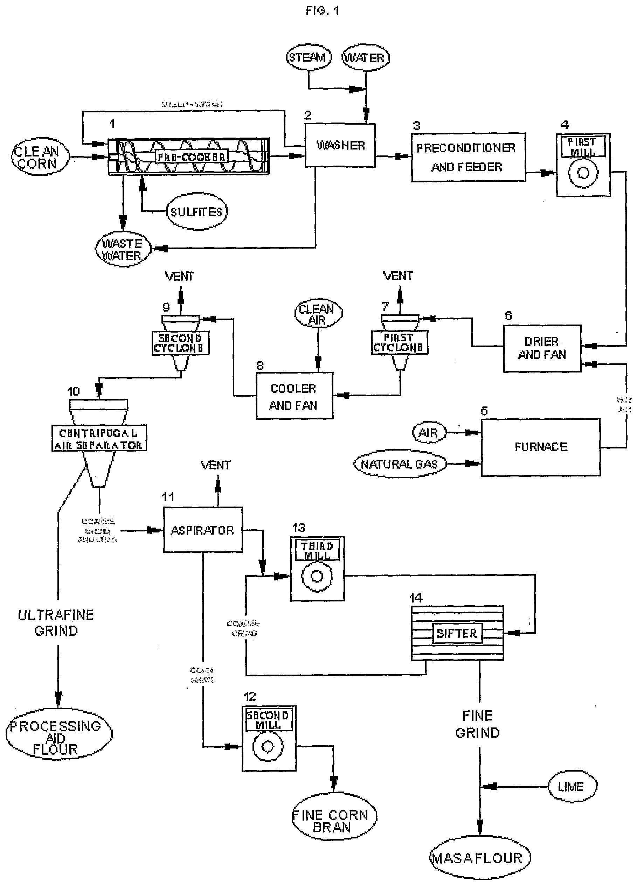

Referring first to FIG. 1, there is depicted, in flowchart form, an embodiment of the present invention. It includes a precooker 1; a washer 2; a preconditioner 3 with a feeder; a primary mill 4; a furnace 5; a dryer 6 with a fan; a first cyclone separator 7; a cooler 8 with a clean air fan; a second cyclone separator 9; a centrifugal air separator 10 with an internal fan; an aspirator system 11; a secondary mill 12; a tertiary mill 13 and a sifter 14.

The precooker 1, whose design is known per se, is fed with cleaned corn and a sodium metabisulfite solution along with hot steep-water (60°C to 70°C) recycled from the washer 2 to form an sulfiting aqueous suspension (corn to water ratio of about 1:1 to about 1:1.5). The solids content of the acidic solution is regulated in the range from about 0.5% to about 0.7%. By controlling the steam heating and the kernel residence time, it is possible to precook corn under atmospheric pressure. The corn suspension is heated with saturated steam to a temperature of from about 75° to about 90° C for a period of 25 to 45 minutes. This allows the sulfiting-precooked kernel to be produced at moisture contents of between 32% and 35%, while the pH is lowered to about 6.2 to about 6.7 with the addition of a 10% acidic sulfiting solution to supply a 0.05% to 0.15% by weight processing aid (based on corn).

The precooker with the sulfites solution causes a partial hydrolysis of fiber, starch and protein that promotes a rapid and uniform diffusion of the cooking water through the base end of the tip cap, move through the pericarp cell-walls up to the kernel crown, and then down into the endosperm and germ components. Saturated steam and sulfites solution also effect a controlled solubilization, pregelatinization and swelling in the corn kernel, allowing a 60% to 70% waste solids reduction as well as a 10% to 20% decrease in wastewater effluent (with a lower sewage cost) as compared to the continuous alkali-cooking process (Alvarez and Ramirez, 1995). This wastewater loss in the precooker can be replaced with recycled steep-water from the washer 2.

The partially precooked corn suspension is then passed to a washer 2 where it is sprayed with steam-heated water at a temperature of about 60° to about 70°C for 30 to 60 seconds, which also serves to increase water absorption and wash off sulfiting aid and soluble solids into wastewater.

The precooked and washed corn is thereafter passed to a preconditioner 3, where the precooked kernel is equilibrated to obtain a residual moisture content of about 34% to about 37% for about 210 to about 340 minutes.

Thereafter, the preconditioned and washed corn is fed through a feeder to a primary mill 4, whose design is known per se, such that the premilled corn and hot air coming from a furnace 5, is mixed and partially precooked by an industrial dryer 6 whose design is known per se. The premilled kernel is thereby flash dried at a high-temperature from 190°C to about 230°C for a short time of 10 sec to about 30 sec. Its starchy endosperm is partially gelatinized to yield a moisture content of 16% to about 18% depending on the granulation being produced.

Moisture laden-hot air (130°C to 180°C, and 11% to 13% moisture) is extracted with a first cyclone separator 7, whose design is known per se, so that further moisture extraction may take place by impelling the drier material through a cooler 8 with clean air sucked by an associated fan, thus further decreasing the moisture content from 16-18% to about 9-12% (similar to incoming corn).

After further extraction of moisture laden-hot air (100°C to 110°C) with a second cyclone separator 9, the precooked dry particle or grind is directed to a centrifugal air separator 10 with a specially designed internal fan. The large-sized portion is known as the coarse grind composed or high-fiber endosperm, germ and bran fractions, while the small-sized portion is described as the ultrafine grind made of low-fiber endosperm and germ fractions.

As the centrifugal fan moves upwardly the ascending air with entrained small-sized particles, then a fine grind is separated as an ultrafine corn flour (of 0.250 mm to 0.044 mm (under 60 to 325 Mesh)) and the coarse grind (of 0.420 mm to 0.177 mm (under 40 to 80 Mesh)) is further separated. The ultrafine grind will be affected most by drag forces whereas the coarse grind by gravity, centrifugal and collision forces produced by the action of an internal fan. This ultrafine corn flour with a moisture content between 9% to 12% is produced from about 30% to about 60% of the total weight of incoming corn. If desired, the ultrafine corn flour can be used either as a processing aid or mixed with adjuvant materials for novel dairy-based foods.

The latter coarse grind is further separated in the aspirator system 11, whose design is known per se, wherein two fractions are obtained, a light bran-fraction which is isolated from a heavy coarser fraction that is further remilled in a tertiary mill 13. The aspirated light fraction is further remilled in a secondary mill 12 as a bran flour (of 0.354 mm (under 45 Mesh)) for whole-corn and partial whole-grain flour with a moisture content between 9% to 12% (representing from about 3% to about 8% of the total weight of incoming corn). The remilled heavy product from a tertiary mill 13 is sent to the sifter 14 for sieving and producing a homogeneous fine corn flour (of 0.354 mm to 0.177 mm (under 45 to 80 Mesh)) with a moisture content from about 9% to 12% (representing a 30% to about 60% of the total weight of incoming corn). If desired, the fine corn flour can be admixed with food-grade lime (0.05%-0.15% weight based on pregelatinized flour) to produce a masa flour for making tortillas otherwise the corn flour can be used as a cereal-base ingredient for cereal foods.

The following table gives a nutrient average composition of pregelatinized corn flours for dairy (ultrafine: <0.250 mm-0.044 mm (<60-325 Mesh)) and cereal-base foods (fine: <0.354mm-0.177 mm (<45-80 Mesh) and bran:<0.354 mm (<45 Mesh)):

| **Nutritional content (g/100 g): Pregelatinized Flours** | | | |
|---|---|---|---|
| **Nutrient** | **Ultrafine**-**corn** | **Fine-corn** | **Bran** |
| *Water* | 11.0 | 11.0 | 11.0 |
| *Protein* | 7.7 | 8.4 | 4.0 |
| *Fat* | 5.2 | 3.7 | 1.4 |
| *Ash* | 1.5 | 1.2 | 2.5 |
| *Calcium* | 0.033 | 0.022 | 0.015 |
| *Dietary fiber:* | 3.7 | 5.2 | 63.2 |
| *Crude fiber* | 0.7 | 1.2 | 13.6 |
| *Starch* | 70.9 | 70.5 | 17.9 |
| *Total Calories:* | 350 | 340 | 95 |

The ultrafine and fine flours contain particles either from a low-fiber or a high-fiber endosperm with germ fractions, whereas the bran flour mainly includes a pericarp with starchy-endosperm fractions. Therefore the pregelatinized corn flours produced by the present method have a higher nutritional value as compared to the conventional methods, with a higher fat (>140%), dietary fiber (20%) and protein (10%) composition than the industrial dry-milled (coarse-meal/fine-flour) corn flours (INCAP, 1961).

### EXAMPLE 1

Preparation of dairy-based foods using an ultrafine corn flour (particles with a low-fiber endosperm and germ fractions) as a processing aid.
1) For use during cheese-processing: Prepare a 10 % dispersion by mixing 4.5 kilos of processing aid or adjuvant corn flour (containing about 5% fat and about 4% dietary fiber) in 40 kilos hot water or hot whole-milk (from 3.0% to about 3.3% fat) with continuous mixing (A tri-blender or milk powder horn provides adequate mixing). Mix until the ultrafine flour dispersion is smooth and homogeneous in appearance. Target a heating temperature from 60°C to about 85°C for 10 minutes to about 30 minutes. Cool down to 30°-32° C and add a cooled 2.5% flour dispersion to the cheese milk-vat in order to obtain from about 0.10% to about 0.25% flour solids in the milk-vat (200 kilos per batch). Follow standard manufacturing procedures for hard (cheddar) or soft (mozzarella, fresh-cheese and processed-spread) cheese foodstuffs (Food Processing Center-pilot plant, University of Nebraska-Lincoln, 2004). The addition of this ultrafine corn flour dispersion instead of using other dispersive hydrocolloids resulted in an increased cheese yield from about 3% to about 15% in both total solids and moisture.
   If other cultured-cheese products are prepared a higher addition is needed to achieve a 0.25% to about 0.6% flour solids. An enhanced acid development and firmness was improved when applied as an aid or adjuvant corn flour with the starter culture system. These American (hard) and Italian (soft) cheeses will have a higher whey-recovery (from 1% to about 2%) than those reported where expression of whey solids has been practiced traditionally. Sanchelima International Inc. has a patented process (continuous heat-gelation treatment) to incorporate a portion of soluble whey proteins into the cheese curd for Latin fresh and cheddar (∼20% to ∼13% yield). A real yield gain, as opposed to water yield, will incorporate water and fat almost proportionally to the initial protein to fat ratio in the whole-milk (from about 1.0 to about 1.2) for every kilo of recovered-whey. If all production procedures are maintained to produce the same type of cheese, the cheese yield will change according to the percentage of moisture and precipitated whey-protein in the final product. Therefore, the ultrafine corn flour used as an aid during cheese making appears to maintain the total-protein to fat ratio (from about 0.8 to about 1.1) in a physical functionality (water and fat-holding effect) with a unique starch-protein complex being formed above the gelatinization/gelation temperature (from about 60° to 85° C for 10 to 30 minutes) of this binding-gel or texturizing aid. Only a few polysaccharides (guar, alginate, carrageenan, xhantan and starch) with a few proteins (gelatin, soya-globulin, casein and whey) have been used to form gels or food-additives (U.S. Pat. No. 4,159,982, EP 0471408 and NZ 507,104).
2) For use in reduced-fat processed cheese and spreads: Prepare a 5% ultrafine flour dispersion and add to the starting skim-milk (from 1% to about 2% fat) as previously explained. Follow standard processed cheese-making methods and the processing aid not only reduced the fat content from 30% to about 45% but also acted like a fat substitute/mimetic and protein substitute/extender. Moreover, texture and appearance are improved in the cheese matrix and less fat separation.
3) For use in low-fat dairy foods. Prepare a 1% to 5% ultrafine flour dispersion and add to the pre-pasteurized skim-milk as earlier described. Apply standard making procedures for the following dairy-foods:
   a) Low-fat sour cream: Reduced fat and calories (66%) with enhanced mouthfeel, smooth texture and good emulsified flavor. Whey syneresis and ropiness defects are also reduced.
   b) Yogurt plain: Enhanced texture and mouthfeel with reduced whey separation in food.
   c) Low-fat cottage cheese dressing: Reduced whey syneresis as well as building viscosity and enhancing texture similar to a smooth full-fat and emulsified food (reduced-fat: 50%).
   d) Low-fat ice cream mix/chocolate or vanilla: The gelatinized ultrafine particles (with a low-fiber endosperm and germ fractions containing about 5% fat and 3.5 kcal/gram) provided a rich/smooth texture to a low/full-fat ice cream (2.7% fat) free of flavor notes.

### EXAMPLE 2

Preparation of cereal-based foods using a fine corn (particles with high-fiber endosperm and germ fractions) and bran flour (particles with pericarp and starchy-endosperm fractions) as a cereal-base ingredient.
1) For use in novel snacks and tortilla manufacture: Either the fine corn or masa flour (with a high-fiber endosperm and germ fractions) made from the presented method can be rehydrated with warm water from a 1:1.0 to about 1:1.3 weight ratio for a corn and masa dough (50% to 55% final moisture content) used in the preparation of industrial third-generation snacks and commercial tortilla-baked foods.
   If a whole-corn or integral flour is prepared for cereal-based foods, then about 5% to about 10% bran flour by weight can be uniformly admixed with a fine corn or masa flour in order to increase its dietary fiber composition from about 3% to about 6% (with 7% to 9% dietary fiber as reported in nixtamalized corn flour: U.S. Patent 6,764,699). An AACC whole-grain definition (2004) requires the same relative proportions of bran, germ and endosperm as the original grain or kernel. Whole-grain ingredients may be used whole, cooked, milled into flour and used to make baked-foods and other products, or extruded or flaked to make breakfast cereals. A challenge is to make these products more appealing than refined-grain products and communicate to the general population their healthier attributes.
   The FDA (1999 and 2002) and AACC (2003) have recognized a new health claim for whole-grain foods and baked goods which may qualify to carry the following labels: a) foods high in insoluble fiber (hemicellulose A/C, cellulose, resistant starch and lignin) and low in fat may reduce colorectal cancer risk (21 CFR 101.76) and b) those foods high in soluble fiber (branched-hemicellulose B or corn-hull gum, b-glucan and hydrocolloid) and low-fat/cholesterol may also lower cholesterol and reduce heart disease risk (21 CFR 101.77 and 81). Cereal-baked products and Functional foods can further lead to a reduction of chronic-disease risk or an improved state of body health to whereby their scientific benefits is communicated to the public and they must achieve their effects in amounts that could normally be expected to be consumed in a standard-diet. Therefore, the food industry has an opportunity to provide function-based (FDA/DHHS-Food Labeling, 2004: 21 CFR 101.54) rather than product-based claim while keeping its shelf-life. The FDA has been petitioned to separate dietary fiber from total carbohydrate declaration on nutrition labels to reduce confusion (Mehta, 2005).
   A Mision light ® labeling claim reported about 3.2 dietary-fiber grams/serving (2 corn tortillas or 23 grams on a dry-basis) while adding a GRAS-fiber ingredient provided a 25% reduced-calorie tortilla (light-tortilla). Three enhanced-fiber tortilla servings (made with enriched Maseca ® flour) should provide about 30% of the FDA daily value (DV). On the other hand, a nixtamalized corn tortilla will provide about 1.8 to 2.2 fiber grams/serving. It is estimated that corn tortilla per capita consumption in Mexico and Central America is around 240 grams/day (10 tortillas or 125 flour grams) accounting for at least a 40% of the daily calorie intake.
2) For use in reduced-calorie and reduced-gluten wheat foods: Either the bran flour or fine corn obtained from the aforementioned process can be uniformly mixed with 45% to 49% by weight wheat flour in order to increase its ingredient formulation from about 3% to about 30% dietary fiber content and from 2% to about 5% non-gluten protein, respectively. Several epidemiological studies have consistently defined whole grains as those food products that comprise more than 25% whole-grain content or bran by weight. Other grain products include dark-bread, popcorn, cooked oatmeal, wheat germ, bran, breakfast-cereals, brown rice, and wheat-bulgur. In the USA, however, the FDA specifies whole-grain products as those meeting the criterion of 51% whole-grain content by weight (Liu, 2003 and Anderson, 2004). This reduced-calorie and reduced-gluten flour can be further used as a cereal-base ingredient during the standard manufacture of wheat-based foods such as: cookie, biscuit, cracker, snack-bar (granola or fruit), flat-bread, flour-tortilla, crumpet, muffin, empanada, pancake, bulgur, dumpling and noodle. Therefore, a daily intake of wheat-based and cereal-based foods higher in non-starch polysaccharides (from bran flour containing 63% dietary fiber and 4% protein) and high-fiber endosperm (from fine corn flour containing 5% dietary fiber and 8% protein) can contribute to a reduction in total calorie-intake (from 25% to about 30%) and to a lesser extent to an allergenic-gluten consumption (from 15 %to about 40%). Nixtamalized corn bran (Maseca ®) used in a low-content carbohydrate/gluten cookie (60% and 15%, respectively) not only decreased LDL-cholesterol in guinea pigs but also reduced the LDL and serum-cholesterol levels in normal (14%) and hypercholesterolaemic (11%) adult men from northern Mexico. They consumed corn-bran cookies during a 6-week study (70 cookie-grams/day with 55% added fine bran containing 64% total fiber, 4% protein, 2% fat and 2% ash). According to the FDA (21 CFR 101.9) the caloric daily value depends on each adult (2,500 kcal to 2,000 kcal) including from about 30 to 25 grams of dietary fiber (food-guide pyramid: 6 to 11 grains-servings/day: DHHS/USDA-Dietary guidelines, 1995). Furthermore, a lower consumption of energy-dense foods (high-fat/protein and high-sugar or high-starch) and soft-drinks (high-free sugar) will also reduce the total daily calories to maintain a healthy-weight.

In this method, the novel physicochemical precooking results in a reduction of 50% to 70% in wastewater solids (0.5% to about 0.7%) with correspondingly lower sewage costs, as compared to the industrial methods (1.5%-2.5%). The bisulfite and sulfite ions in the processing aid solution aids in preventing undesired spore-forming bacterial growth and browning-pigment reactions during the precooked-corn preconditioning. The low-temperature precooking (75°C-90°C) using a sulfites solution (0.05%-0.15%) not only aids in hydrolyzing the insoluble fiber, starch and protein but also improves its bran removal for integral flour. It also dissolves bran, endosperm and germ components without using a low-lime (U.S. Patent Nos. 6,344,228, 6,387,437 and 6,428,828) or a high-sulfite concentration (U.S. Pat. No. 6,322,836 and WO 2004/023892).

There is furthermore a higher than 90% yield of ultrafine and fine corn flours per kilogram of cleaned corn, the meal and flour produced by corn dry-milling obtains only a 65% to 70% yield, or a 80% to 85% yield for an integral arepa flour (U.S. Pat. No. 6,326,045).

From the foregoing, it will be apparent that it is possible to manufacture pregelatinized corn flours with a novel continuous process which is efficient because of sulfites corn-precooking and centrifugal air-separation yielding ultrafine flour for dairy-based and fine flour for cereal-based foods, wherein some of the nutrients and solid losses that would have been present but for the features of this invention are prevented.

It is to be understood that the embodiments of this invention herein illustrated and described in detail, are by way of illustration and not of limitation. Other changes and modifications are possible and will present themselves to those skilled in the prior art.

## Claims

1. A physicochemical process for the production of pregelatinized ultrafine corn flours having a particle size of 0.250 mm to 0.044 mm (under 60 to 325 mesh) for use as a processing aid in the preparation of dairy-based foods, comprising the steps of:
precooking cleaned corn kernel with steam in an acidic sulfiting solution comprising at least one sulfite component selected from the group consisting of sodium metabisulfite, sodium hydrogen sulfite and sodium sulfite;
washing said sulfite-precooked corn kernel to remove soluble solids into wastewater and stabilizing a moisture content of said precooked corn kernel;
milling said precooked and washed corn kernel and drying said milled corn kernel for partial gelatinization;
cooling and further drying said milled and dried corn kernel with clean air; and
separating said milled corn to recover an ultrafine grind of 0.250 mm to 0.044 mm (under 60 to 325 mesh) comprising the ultrafine corn flour;
wherein the separating step is performed using a centrifugal air separator, and comprises subjecting the milled corn to a rising stream of air and separating the ultrafine corn flour from non-ultrafine milled corn based on differences between effects of aerodynamic drag forces imparted by the rising stream of air on the ultrafine corn flour as opposed to said non-ultrafine milled corn.

2. The method of claim 1, wherein said precooking step uses sulfites in an amount of 0.02% to 0.15% by weight of the cleaned corn kernel.

3. The method of claim 1, wherein the separating step separates the ultrafine grind from a coarse grind, the ultrafine grind comprising low-fiber endosperm and germ fractions, the coarse grind comprising high-fiber endosperm, germ and bran fractions.

4. The method according to claim 3, comprising the further steps of:
aspirating the coarse grind to remove a light corn bran fraction;
remilling the aspirated coarse grind; and
recycling the aspirated and remilled high-fiber endosperm and germ fractions of the coarse grind.

5. The method according to claim 4, wherein the recycling step comprises sifting the aspirated and remilled coarse grind into a finer fraction, of 0.354 mm to 0.177 mm (under 45 to 80 mesh), to produce a fine corn flour suitable for cereal-based foods.

6. The method of claim 5, wherein said ultrafine and fine corn flours represent a 91% to 96% yield of the total weight of corn kernel.

7. The method of claim 5, comprising the further step of regrinding the light corn bran fraction produced by the aspirating step to less than 0.354 mm (under 45 mesh) to produce a bran flour.

8. The method of claim 7, wherein said light corn bran fraction comprises 3% to 8% flour per kilogram of corn kernel.

9. The method according to claim 7, comprising the further step of mixing said fine corn flour with 5% to 10% by weight of said bran flour to produce a whole-corn flour with increased dietary fiber content.

10. The method of claim 9, further comprising the steps of:
admixing said bran flour with 45% to 49% by weight wheat flour, to produce a partial whole-grain flour with decreased total calorie content; and
manufacturing at least one of wheat-based and cereal-based foods using both the partial whole-grain flour and the whole-corn flour.

11. The method of claim 7, further comprising admixing said bran flour with 45% to 49% by weight wheat flour, to produce a partial whole-grain flour with decreased total calorie content.

12. The method of claim 1, wherein the ultrafine corn flour is used as a processing aid by adding the flour to the dairy based-food in an amount of 0.10% to 0.25% by weight.

13. The method of claim 1, wherein the ultrafine corn flour is used as a processing aid by adding the flour to the dairy based-food in an amount of 0.25% to 0.60%.

## Patentansprüche

1. Physikalisch-chemisches Verfahren zur Herstellung vorgelatinierter ultrafeiner Maismehle mit einer Partikelgröße von 0,250 mm bis 0,044 mm (unter Siebgröße 60 bis 325) zur Verwendung als Verarbeitungshilfsstoff bei der Bereitstellung von Nahrungsmitteln auf Milchbasis, folgende Schritte umfassend:
Vorkochen der gereinigten Maiskörner mittels Dampf in einer sauren Sulfitierungslösung, die mindestens ein Sulfitbestandteil umfasst, der aus der Gruppe ausgewählt ist, die aus Natriummetabisulfit, Natriumhydrogensulfit und Natriumsulfit besteht;
Waschen der Sulfit-vorgekochten Maiskörner, um lösliche Feststoffe in das Abfallwasser zu entfernen, und Stabilisieren des Feuchtegehalts der vorgekochten Maiskörner;
Mahlen der vorgekochten und gewaschenen Maiskörner und Trocknen der gemahlenen Maiskörner für die Teilgelatinisierung;
Kühlen und Weitertrocknen der gemahlenen und getrockneten Maiskörner mittels reiner Luft; und
Trennen des gemahlenen Mais, um ultrafeine Körner mit 0,250 mm bis 0,044 mm (unter Siebgröße 60 bis 325) zu erhalten, die das ultrafeine Maismehl umfassen;
wobei der Trennschritt unter Verwendung einer Zentrifugal-Luft-Trennvorrichtung durchgeführt wird und das Aussetzen des gemahlenen Mais gegenüber einem aufsteigenden Luftstrom und das Trennen des ultrafeinen Maismehls vom nicht-ultrafeinen gemahlenen Mais umfasst, basierend auf den unterschiedlichen Effekten der aerodynamischen Zugkräfte, die durch den aufsteigenden Strom auf das ultrafeine Maismehl im Gegensatz zum nicht-ultrafeinen gemahlenen Mais ausgeübt werden.

2. Verfahren gemäß Anspruch 1, bei dem im Vorkochschritt Sulfite in einer Menge von 0,02 Gew.-% bis 0,15 Gew.-%, bezogen auf die gereinigten Maiskörner verwendet werden.

3. Verfahren gemäß Anspruch 1, bei dem der Trennschritt die ultrafeinen Körner von den groben Körnern trennt, wobei die ultrafeinen Körner faserarmes Endosperm und Keimbruchteile umfassen und die groben Körner faserreiches Endosperm, Keim- und Kleiebruchteile umfassen.

4. Verfahren gemäß Anspruch 3, das die folgenden weiteren Schritte umfasst:
Absaugen der groben Körner, um den leichten Maiskleie-Bruchteil zu entfernen;
Erneutes Mahlen der abgesaugten groben Körner; und
Wiederverwertung des abgesaugten und gemahlenen faserreichen Endosperms und der Keimbruchteile der groben Körner.

5. Verfahren gemäß Anspruch 4, bei dem der Wiederverwertungsschritt das Sieben der abgesaugten und erneut gemahlenen groben Körner zu einem feineren Bruchteil, von 0,354 mm bis 0,177 mm (unter Siebgröße 45 bis 80), umfasst, um ein feines Maismehl herzustellen, das für getreidebasierte Nahrungsmittel geeignet ist.

6. Verfahren gemäß Anspruch 5, bei dem die ultrafeinen und feinen Maismehle einer Ausbeute von 91% bis 96% bezüglich des Gesamtgewichts der Maiskörner entsprechen.

7. Verfahren gemäß Anspruch 5, das den zusätzlichen Schritt des erneuten Mahlens des leichten Maiskleie-Bruchteils, hergestellt durch den Absaugschritt, zu weniger als 0,354 mm (unter Siebgröße 45) umfasst, um ein Kleiemehl zu herzustellen.

8. Verfahren gemäß Anspruch 7, bei dem der leichte Maiskleie-Bruchteil 3% bis 8% Mehl pro Kilogramm Maiskörner umfasst.

9. Verfahren gemäß Anspruch 7, das den zusätzlichen Schritt des Mischens des feinen Maismehls mit 5 Gew.-% bis 10 Gew.-% des Kleiemehls umfasst, um ein Vollkornmehl mit erhöhtem Ballaststoffgehalt herzustellen.

10. Verfahren gemäß Anspruch 9, das zusätzlich die folgenden Schritte umfasst:
Beimengen von 45 Gew.-% bis 49 Gew.-% Weizenmehl zum Kleiemehl, um ein anteiliges Vollkornmehl mit einem verringerten Gesamtkaloriengehalt herzustellen; und
Herstellen mindestens eines aus weizenbasierten und getreidebasierten Nahrungsmitteln unter Verwendung sowohl des anteiligen Vollkornmehls, als auch des Vollkornmehls.

11. Verfahren gemäß Anspruch 7, das zusätzlich das Beimengen von 45 Gew.-% bis 49 Gew.-% Weizenmehl zum Kleiemehl umfasst, um ein anteiliges Vollkornmehl mit einem verringerten Gesamtkaloriengehalt herzustellen.

12. Verfahren gemäß Anspruch 1, bei dem das ultrafeine Maismehl als Verarbeitungshilfstoff, durch Hinzufügen des Mehls zu einem milchbasierten Nahrungsmittel in einer Menge von 0,10 Gew.-% bis 0,25 Gew.-%, verwendet wird.

13. Verfahren gemäß Anspruch 1, bei dem das ultrafeine Maismehl als Verarbeitungshilfstoff, durch Hinzufügen des Mehls zu einem milchbasierten Nahrungsmittel in einer Menge von 0,25 Gew.-% bis 0,60 Gew.-%, verwendet wird.

## Revendications

1. Procédé physico-chimique pour la production de farines de maïs ultrafines prégélatinisées ayant une taille de particule de 0,250 mm à 0,044 mm (sous 60 à 325 mesh) pour son utilisation comme adjuvant de fabrication dans la préparation de produits alimentaires à base de produits laitiers, comprenant les étapes suivantes :
la cuisson préalable de grains de maïs nettoyés avec de la vapeur d'eau dans une solution acide de sulfitage comprenant au moins un composant de sulfite choisi dans le groupe constitué par le métabisulfite de sodium, l'hydrogénosulfite de sodium et le sulfite de sodium ;
le lavage desdits grains de maïs préalablement cuits au sulfite pour éliminer les matières solubles solides dans une eau résiduaire et la stabilisation d'une teneur en humidité desdits grains de maïs préalablement cuits ;
le broyage desdits grains de maïs préalablement cuits et lavés et le séchage desdits grains de maïs broyés à des fins de gélatinisation partielle ;
le refroidissement et le séchage supplémentaire desdits grains de maïs broyés et séchés avec de l'air propre ; et
la séparation dudit maïs broyé pour récupérer un produit broyé ultrafin de 0,250 mm à 0,044 mm (sous 60 à 325 mesh) comprenant la farine de maïs ultrafine ;
dans lequel l'étape de séparation est réalisée en utilisant un séparateur à air à force centrifuge, et comprend la soumission du maïs broyé à un flux d'air de rinçage et la séparation de la farine de maïs ultrafine du maïs broyé non ultrafin sur la base des différences entre les effets des traînées aérodynamiques conférées par le flux d'air de rinçage à la farine de maïs ultrafine par opposition audit maïs broyé non ultrafin.

2. Procédé selon la revendication 1, dans lequel ladite étape de cuisson préalable utilise des sulfites en une quantité de 0,02 % à 0,15 % en poids des grains de maïs nettoyés.

3. Procédé selon la revendication 1, dans lequel l'étape de séparation sépare le produit broyé ultrafin d'un produit broyé grossier, le produit broyé ultrafin comprenant des fractions d'endosperme et de germe à faible teneur en fibre, le produit broyé grossier comprenant des fractions d'endosperme, de germe et de son à teneur élevée en fibre.

4. Procédé selon la revendication 3, comprenant les étapes supplémentaires suivantes :
l'aspiration du produit broyé grossier pour éliminer une fraction légère de son de maïs ;
le rebroyage du produit broyé grossier aspiré ; et
le recyclage des fractions d'endosperme et de germe à teneur élevée en fibre aspirées et rebroyées du produit broyé grossier.

5. Procédé selon la revendication 4, dans lequel l'étape de recyclage comprend le tamisage du produit broyé grossier aspiré et rebroyé pour obtenir une fraction plus fine, de 0,354 mm à 0,177 mm (sous 45 à 80 mesh), pour produire une farine de maïs fine appropriée pour des produits alimentaires à base de céréale.

6. Procédé selon la revendication 5, dans lequel lesdites farines de maïs ultrafines et fines représentent un rendement de 91 % à 96 % du poids total des grains de maïs.

7. Procédé selon la revendication 5, comprenant l'étape supplémentaire de rebroyage de la fraction légère de son de maïs produite par l'étape d'aspiration jusqu'à moins de 0,354 mm (sous 45 mesh) pour produire une farine de son.

8. Procédé selon la revendication 7, dans lequel ladite fraction légère de son de maïs comprend 3 % à 8 % de farine par kilogramme de grain de maïs.

9. Procédé selon la revendication 7, comprenant l'étape supplémentaire de mélange de ladite farine de maïs fine avec 5 % à 10 % en poids de ladite farine de son pour produire une farine de maïs entier présentant une teneur accrue en fibre alimentaire.

10. Procédé selon la revendication 9, comprenant en outre les étapes suivantes :
le mélange de ladite farine de son avec 45 % à 49 % en poids de farine de blé, pour produire une farine partielle de grains entiers présentant une teneur réduite en calorie totale ; et
la préparation d'au moins un parmi des produits alimentaires à base de blé et à base de céréale en utilisant la fois la farine partielle de grains entiers et la farine de maïs entier.

11. Procédé selon la revendication 7, comprenant en outre le mélange de ladite farine de son avec 45 % à 49 % en poids de farine de blé, pour produire une farine partielle de grains entiers présentant une teneur réduite en calorie totale.

12. Procédé selon la revendication 1, dans lequel la farine de maïs ultrafine est utilisée comme adjuvant de fabrication par ajout de la farine au produit alimentaire à base de produits laitiers en une quantité de 0,10 % à 0,25 % en poids.

13. Procédé selon la revendication 1, dans lequel la farine de maïs ultrafine est utilisée comme adjuvant de fabrication par ajout de la farine au produit alimentaire à base de produits laitiers en une quantité de 0,25 % à 0,60 % en poids.
